Europäisches Patentamt

European Patent Office

Office européen des brevets

(11) Veröffentlichungsnummer: **0 165 560 B1**

(12) **EUROPÄISCHE PATENTSCHRIFT**

(45) Veröffentlichungstag der Patentschrift: **15.01.92**

(51) Int. Cl.⁵: **E21B 43/22**

(21) Anmeldenummer: **85107315.5**

(22) Anmeldetag: **13.06.85**

Die Akte enthält technische Angaben, die nach dem Eingang der Anmeldung eingereicht wurden und die nicht in dieser Patentschrift enthalten sind.

(54) **Verfahren zur lagerstättenbezogenen Verbesserung der Eigenschaften wässriger Polymerlösungen, die zum Polymerfluten dienen.**

(30) Priorität: **19.06.84 DE 3422612**

(43) Veröffentlichungstag der Anmeldung:
**27.12.85 Patentblatt 85/52**

(45) Bekanntmachung des Hinweises auf die Patenterteilung:
**15.01.92 Patentblatt 92/03**

(84) Benannte Vertragsstaaten:
**AT DE FR GB IT NL**

(56) Entgegenhaltungen:
**EP-A- 0 102 249**
**DE-B- 2 733 852**
**GB-A- 2 115 430**

(73) Patentinhaber: **BASF Aktiengesellschaft**
**Carl-Bosch-Strasse 38**
**W-6700 Ludwigshafen(DE)**

(72) Erfinder: **Martischius, Franz-Dieter, Dipl.-Ing. Dr.**
**Im Biengarten 4**
**W-6730 Neustadt(DE)**
Erfinder: **Karau, Dieter, Dipl.-Ing.**
**Joh.-Sebastian-Bach.-Strasse 10**
**W-6831 Plankstadt(DE)**
Erfinder: **Arnold, Werner, Dipl.-Ing.**
**Joh.-Sebastian.-Bach-Strasse 5**
**W-6831 Plankstadt(DE)**
Erfinder: **Barthold, Klaus, Dr.**
**Paulusbergstrasse 4**
**W-6800 Mannheim 51(DE)**

EP 0 165 560 B1

**Beschreibung**

Die Erfindung betrifft ein Verfahren, das die Anpassung der flutungsspezifischen Eigenschaften einer Polymerlösung für die EOR-Anwendung ("Enhanced Oil Recovery") an die jeweiligen Lagerstättenverhältnisse ermöglicht. Dadurch wird die Effizienz des Polymerflutens verbessert.

Unter Polymerfluten wird dabei die z.B. in Nachr.Chem.Tech.Lab. 27 (1979), Nr. 6, im einzelnen beschriebene Methodik der tertiären Ölgewinnung verstanden.

Der Zusatz von wasserlöslichen Polymeren zum Flutwasser erniedrigt die Mobilität des Flutungsmediums und führt damit zu einer Verbesserung des volumetrischen Flutungswirkungsgrades. Im Vergleich zum konventionellen Wasserfluten können größere Bereiche der Lagerstätte durchströmt und damit auch entölt werden, wodurch sich der Entölungsgrad einer Lagerstätte deutlich erhöhen läßt.

Die meisten Polymerflutprojekte werden mit partiell verseiften Polyacrylamiden durchgeführt, da diese Polymere in niedersalinaren Wässern die am stärksten ausgeprägten viskositätserhöhenden Eigenschaften zeigen. Vorzugsweise geht man von sogenannten Polymeremulsionen aus. In einer organischen Phase sind Wassertropfen dispergiert, die das Polymer enthalten. Nach einer Phaseninversion können sich die angequollenen polymeren Teilchen schnell in der dann kontinuierlichen wäßrigen Phase lösen.

Um die Fließvorgänge in der Lagerstätte positiv beeinflussen zu können, müssen die Polymerlösungen ein Spektrum von Anforderungen erfüllen, das je nach Art der Lagerstättenverhältnisse unterschiedlich gewichtet sein kann. Neben der chemischen und biologischen Langzeitstabilität sowie der Unempfindlichkeit gegen Fremdionen, auf die hier nicht näher eingegangen wird, sind folgende Eigenschaften von Bedeutung:

1. Druckanstieg beim Filtrationstest

Obwohl die Fließvorgänge im Lagerstättengestein durch Filtrationstests an Millipore Filtern nur in gewisser Näherung beschrieben werden können, hat sich dieses Meßverfahren zu einer Standardprüfmethode entwickelt (Kohler, N.G. Chauvetau, SPE 7435, 1978). Der Druckanstieg beim Filtrationstest sollte möglichst gering bleiben.

2. Höhe des Residual-Resistance-Factor (RRF)

Der RRF-Wert gibt an, um welchen Faktor die Gesteinspermeabilität nach Durchströmen mit Polymerlösung reduziert worden ist. Der optimale RRF-Wert einer Polymerlösung ist eine lagerstättenspezifische Größe und wird in der Regel durch Simulationsrechnungen ermittelt. Daher besteht die Notwendigkeit, den RRF-Wert den Lagerstättenverhältnissen anpassen zu können.

3. **Flacher Verlauf des Resistance-Factor RF im Bereich kleinster Geschwindigkeiten ($V_D < 0,1 \frac{m}{d}$)**

Bei den in extrem niederpermeablen Zonen auftretenden geringen Strömungsgeschwindigkeiten darf der RF-Wert nicht mehr wie Bereich mittlerer Geschwindigkeiten anwachsen. Vielmehr sollte er einen konstanten Wert annehmen, da ansonsten ein Fluten der ohnehin schon kritischen niederpermeablen Zonen weiterhin erschwert wird.

4. **Schwaches Ansteigen des Resistance Factor im Bereich der Injektionsgeschwindigkeiten ($10 \frac{m}{d} < V_D < 100 \frac{m}{d}$)**

Aufgrund ihrer viskoelastischen Eigenschaften zeigen Lösungen partiell verseifter Polyacrylamide im Bereich typischer Injektionsgeschwindigkeiten ein unerwünschtes Anwachsen ihres RF-Wertes (Seright, R.S., SPE 9297, 1980). Hierdurch wird ein erhöhter Injektionsdruck erforderlich, der aus Gründen der Gesteinsfestigkeit häufig nicht verwirklicht werden kann, da die Gefahr der hydraulischen Rißbildung besteht. Um die Polymerlösung in ausreichender Menge in die Lagerstätte injizieren zu können, darf der RF-Wert im Bereich der Injektionsgeschwindigkeiten daher nicht oder nur in geringem Umfang anwachsen.

## 5. Hohe effektive Viskosität in Porenströmungen im Bereich mittlerer Lagerstättengeschwindigkeiten ($0,1 \frac{m}{d} < V_D < 1 \frac{m}{d}$)

Um im Bereich mittlerer Lagerstättengeschwindigkeiten eine ausgeprägte mobilitätserniedrigende Wirkung zu erhalten, sollte die effektive Viskosität der Polymerlösungen in Porenströmungen möglichst hoch sein und durch die zur Verbesserung der unter 1. bis 4. beschriebenen Eigenschaften durchgeführten Maßnahmen nur geringfügig reduziert werden.

Es ist bekannt, daß gelöste, partiell verseifte Polyacrylamide unter dem Einfluß einer mechanischen Beanspruchung abgebaut werden. Es wird deshalb beispielsweise empfohlen (D. Noran, Oil and Gas Journal, 54, 1976), beim Verpumpen dieser Lösungen keine Kreiselpumpen zu verwenden. Da bei einer mechanischen Beanspruchung bevorzugt die höhermolekularen Komponenten zerstört werden, die die unter 1 bis 4 genannten Eigenschaften negativ beeinflussen, ist es Stand der Technik, die Polymerlösungen einer anderen gezielten mechanischen Beanspruchung als mit Kreiselpumpen zu unterwerfen, um so einige der unter 1 bis 4 genannten Eigenschaften zu verbessern.

So führt die Durchströmung von lagerstättentypischem Gesteinsmaterial bei hinreichend hohen Strömungsgeschwindigkeiten bei nochmaliger Verwendung der Lösungen zu einem günstigeren Verlauf des RF-Wertes im Bereich der Injektionsgeschwindigkeiten (R.S. Seright, SPE 9297, 1980). Eine technische Anwendung dieser Beobachtung ist jedoch aus praktischen Gründen nicht möglich. Eine Nachscherung der Polymerlösungen in einer Lochplatteneinheit führt gemäß DE 27 33 852 ebenfalls zu einer Verbesserung der Fließeigenschaften. Gemäß dieser Patentschrift bleibt an einem Gesteinskern bzw. einer Sandpackung nicht näher beschriebener Permeabilität und Porosität der Druckabfall bei gleicher Fließrate konstant, ferner wird der Verlauf der Scherviskosität als Funktion der Schergeschwindigkeit verbessert und der Injektionsdruck beim Fluten einer Sandpackung von 0,38 bar auf 0,16 bar reduziert, wobei die Scherviskosität bei einer Schergeschwindigkeit von 100 $s^{-1}$ nur von 7,5 auf 7,3 mPa.s reduziert wird. Ferner ist aus DE 33 03 895 bekannt, daß durch eine Scherbehandlung in einer Kolloidmühle ohne großen Viskositätsverlust die Filtrierbarkeit einer Heteropolysaccharidlösung verbessert werden kann.

Es ist demnach bisher noch kein Verfahren bekannt geworden, das gleichzeitig sämtliche unter 1 bis 4 aufgeführten Eigenschaften verbessert und die unter 5 genannten Bedingungen erfüllt.

Es bestand daher die Aufgabe, ein Verfahren vorzuschlagen, das eine Optimierung aller genannten Eigenschaften ermöglicht.

Diese Aufgabe wurde überraschenderweise gelöst mit einem Verfahren zur lagerstättenbezogenen Verbesserung der Eigenschaften wäßriger Polymerlösungen, die zum Polymerfluten dienen, wobei man Lösungen von Copolymeren aus Acrylamid und Natriumacrylat mit einem durchschnittlichen Molekulargewicht von $1 \cdot 10^6$ bis $40 \cdot 10^6$, vorzugsweise $5 \cdot 10^6$ bis $20 \cdot 10^6$, und mit einem Polymergehalt mit bis zu 5.000 ppm in mehrstufigen Seitenkanalpumpen einer Behandlung unter turbulenten Strömungsbedingungen unterwirft, wobei die Verweilzeit der Polymerlösungen in diesen Vorrichtungen weniger als etwa 20 sec und die aufgewandte Pumpenenergie 1 bis 15 Watt/l durchgesetzter Lösung beträgt.

Der Scherung in den mehrstufigen Seitenkanalpumpen kann ein statischer Mischer, wie z.B. eine Vorrichtung gemäß DE-Patentschrift 2 525 020 nachgeschaltet werden.

Man kann auch die Lösungen im Kreis führen und mehrals die Seitenkanalpumpen passieren lassen, bis die erwünschten Eigenschaften des Polymers erhalten werden.

Obgleich nicht sicher feststellbar ist, wodurch die vorteilhaften Eigenschaften der Polymerlösungen mit dem erfindungsgemäßen Verfahren erhalten werden, wird angenommen, daß durch die Kombination der Verweilzeit und Energiedichte die noch vorhandenen Gelteilchen nahezu vollständig zerstört und extrem hochmolekulare Anteile bevorzugt abgebaut werden, ohne daß das mittlere Molekulargewicht und damit die Viskosität erheblich erniedrigt werden.

Als Polymerlösungen kommen vor allem Lösungen von Copolymeren des Acrylamids und des Natriumacrylats, die 99 bis 50 Gew.% Acrylamideinheiten und 1 bis 50 Gew.% Acrylateinheiten und ein mittleres Molekulargewicht von $1 \cdot 10^6$ bis $40 \cdot 10^6$, vorzugsweise $5 \cdot 10^6$ bis $20 \cdot 10^6$, aufweisen. Polymere der genannten Art sind beispielsweise in der US-Patentschrift 3,284,393 beschrieben.

Die Polymerlösungen enthalten in der Regel die Copolymeren in Konzentrationen bis zu 5000 ppm. Hierbei ist die obere Konzentrationsgrenze jedoch nur durch die zunehmende Viskosität gegeben und die untere Grenze durch die zunehmenden Kosten, die mit der Behandlung größerer Mengen verdünnter Lösungen entstehen. Deshalb verwendet man vorteilhaft Lösungen mit einem Polymergehalt bis zu 3000 ppm, vorzugsweise mit einem Polymergehalt von ca. 2000 bis 3000 ppm. Diese Lösungen werden dann

EP 0 165 560 B1

nach der erfindungsgemäßen Behandlung auf die zur Anwendung benötigten Konzentrationen von 300 bis 2000 ppm verdünnt.

Die erfindungsgemäß zu verwendenden Polymerlösungen stellt man in an sich bekannter Weise (vgl. z.B. DE-Patentschrift 2 154 081) so her, daß ein als Wasser in Öl vorliegende Polymeremulsion in eine Öl in Wasser-Emulsion umgewandelt wird, wobei sich das Polymer in Wasser löst.

Unter turbulenten Strömungsbedingungen versteht man Strömungsverhältnisse, die dadurch gekennzeichnet sind, daß die Geschwindigkeit der einzelnen Flüssigkeitsteilchen unregelmäßig schwankt. Diese Schwankungsbewegungen führen zu einer intensiven mechanischen Beanspruchung der gelösten Polymeren, deren Eigenschaftsprofil hierdurch in der gewünschten Weise verbessert wird. Für weitere Einzelheiten wird dazu auf Technische Strömungslehre von E. Becker, Teubner Verlag, Stuttgart 1974 verwiesen.

Die für den Betrieb der Pumpe aufgewandte Energie beträgt, bezogen auf einen Liter der zu behandelnden Polymerlösung, bis 15 Watt. Vorzugsweise wird ein Energieaufwand von 2,5 bis 10 Watt/l und eine Verweilzeit von 3 bis 10 sec eingehalten.

Zur Durchführung des erfindungsgemäßen Verfahrens geht man im einzelnen so vor, daß man dem Wasserstrom mittels Dosierpumpe Additive zugibt, im statischen Mischer mischt, die Polymeremulsion zudosiert, die erzeugte Mischung invertiert, die Polymerlösung in einer Verweilzeitstrecke nachreifen läßt, die gereifte Lösung in der erfindungsgemäßen Einrichtung nachbehandelt und auf die gewünschte Endkonzentration verdünnt.

Beispiel 1 (Vergleichsbeispiel)

Zur kontinuierlichen Herstellung von 200 m³/d Polymerlösung mit einer Konzentration des Polymers von 700 ppm werden 390 ml/min einer Wasser-in-Öl-Emulsion, die 25 % eines Copolymers aus 70 % Acrylamid und 30 % Natriumacrylat mit einem mittleren Molekulargewicht 6 · 10⁶ enthält, einer Mischeinrichtung zugeführt. Mit einem Netzmittel enthaltenden Wasserstrom von 34,7 1/min wird eine 0,28 %ige Stammlösung hergestellt, die nach fünfminütiger Reifezeit auf 700 ppm verdünnt wird bzw. gemäß den folgenden Beispielen 2 und 3 nachbehandelt wird.

Beispiel 2

Die Stammlösung gemäß Beispiel 1 wird in einer sechsstufigen Seitenkanalpumpe nachgeschert, wobei durch einen druckseitig eingebauten statischen Mischer die Verweilzeit der Lösung in der Pumpe auf ca. 3,2 sec eingestellt wird. Die Energiedichte beträgt 3,5 Watt/l. Die so nachbehandelte Lösung wird dann auf die Endkonzentration von 700 ppm verdünnt.

Beispiel 3

Die Stammlösung gemäß Beispiel 1 wird in einer sechsstufigen Seitenkanalpumpe nachgeschert, wobei analog Beispiel 2 die Verweilzeit der Lösung in der Pumpe auf ca. 6,5 sec eingestellt wird. Die Energiedichte beträgt ca. 6,9 Watt/l. Die so nachbehandelte Lösung wird dann auf die Endkonzentration von 700 ppm verdünnt.

Die Lösungen gemäß Beispielen 2 und 3 zeigen gegenüber der Lösung des Vergleichsbeispiels 1 folgende Vorteile:

1. Es wird eine deutliche Verbesserung der Filtrierbarkeit erreicht. Nach zehnstündiger Durchströmung eines 3 μm Millipore Filters bei konstantem Durchsatz von 10 ml/h bei einer Polymerkonzentration von 700 ppm baut sich im Falle der nicht nachbehandelten Lösung (1) am Filter ein Differenzdruck von 110 mbar auf. Für die mit einer einstufigen Kreiselpumpe bzw. einer sechsstufigen Seitenkanalpumpe nachbehandelten Lösungen (2) und (3) lauten die entsprechenden Druckwerte nur 12 mbar (Lösung 2) bzw. 5 mbar (Lösung 3). Dabei wird die Viskosität der Lösung (1) durch die Nachbehandlung nur geringfügig reduziert.

4

| Schergeschwindigkeit | $10\ s^{-1}$ | $100\ s^{-1}$ |
|---|---|---|
| $\eta$ (1) [mPas] | 40,5 | 15,9 |
| $\eta$ (2) [mPas] | 37,8 | 15,3 |
| $\eta$ (3) [mPas] | 35,4 | 14,8 |

2. Der Residual-Resistance-Factor (RRF) kann durch die Intensität der mechanischen Nachbehandlung gezielt beeinflußt und somit optimiert werden. Er beträgt, gemessen an Gesteinskernen aus Bentheimer Sandstein (Permeabilität ca. 1800 m Darcy, Porosität ca. 30 %), RRF = 1,5 für die nicht nachbehandelte Lösung (1) und RRF = 1,2 bzw. RRF = 1,0 für die wie beschrieben nachbehandelten Lösungen und (3).

3. Der Verlauf des Resistance-Factor (RF) bei kleinen Strömungsgeschwindigkeiten ist für die nachgescherten Lösungen (2) und (3) durch das Erreichen eines Plateauwertes gekennzeichnet. Dieser liegt bei RF = 38 für die Lösung (3) und RF = 52 für die Lösung (2), wohingegen der RF-Wert der Lösung (1) im Bereich 0,01 $\frac{m}{d}$ < $V_D$ < 0,1 $\frac{m}{d}$ immer noch ansteigt und Werte von RF = 80 übersteigt. Es ist demnach möglich, die Fließfähigkeit der Polymerlösungen bei kleinsten Geschwindigkeiten, wie sie in extrem niederpermeablen Zonen auftreten, durch die Nachbehandlung in weiten Bereichen zu steuern.

4. Bei einer typischen Injektionsgeschwindigkeit von $V_D$ = 10 $\frac{m}{d}$ hat die nicht nachgescherte Lösung (1) einen RF-Wert von RF = 65. Die entsprechenden Werte der Lösungen (2) und (3) lauten RF = 22 und RF(3) = 10, so daß sich diese deutlich besser injizieren lassen, zumal sie auch das günstigere Filtrationsverhalten zeigen.

5. Die für die mobilitätserniedrigende Wirkung der Polymerlösung wichtige effektive Viskosität in Porenströmungen wird durch die Nachscherung kaum beeinflußt. Sie ergibt sich aus Gl(1)

$$\eta_{eff} = \eta_\omega\ \frac{RF}{RRF} \qquad (1)$$

$\eta$ eff = effektive Viskosität

$\eta\omega$ = Viskosität von Wasser

RF = Resistance-Factor

RRF = Residual-Resistance-Factor

Für mittlere Lagerstättengeschwindigkeiten von $V_D$ = 0,1 $\frac{m}{d}$ und $V_D$ = 1 $\frac{m}{d}$ betragen die effektiven Viskositäten nach Gl(1)

| $V_D$ $[\frac{m}{d}]$ | 0,1 | 1 |
|---|---|---|
| $\eta_{eff}$ (1) [mPas] | 33,6 | 20,3 |
| $\eta_{eff}$ (2) [mPas] | 32,4 | 19,6 |
| $\eta_{eff}$ (3) [mPas] | 31,0 | 18,8 |

Die erfindungsgemäße mechanische Nachbehandlung der Polymerlösungen ermöglicht also die gleichzeitige Verbesserung der unter 1 bis 5 genannten Kriterien und damit eine umfassende Optimierung der flutungsspezifischen Eigenschaften, wie sie mit den bisher bekannten Scherverfahren in dieser Breite nicht möglich ist.

**Patentansprüche**

1. Verfahren zur lagerstättenbezogenen Verbesserung der Eigenschaften wäßriger Polymerlösungen, die zum Polymerfluten dienen, dadurch gekennzeichnet, daß man Lösungen von Copolymeren aus Acrylamid und Natriumacrylat mit einem durchschnittlichen Molekulargewicht von 1 • $10^6$ bis 40 • $10^6$,

vorzugsweise 5 $\cdot$ 10$^6$ bis 20 $\cdot$ 10$^6$, und mit einem Polymergehalt mit bis zu 5.000 ppm in mehrstufigen Seitenkanalpumpen einer Behandlung unter turbulenten Strömungsbedingungen unterwirft, wobei die Verweilzeit der Polymerlösungen in diesen Vorrichtungen weniger als etwa 20 sec und die aufgewandte Pumpenenergie 1 bis 15 Watt/l durchgesetzter Lösung beträgt.

2. Verfahren nach Anspruch 1, dadurch gekennzeichnet, daß man Lösungen von partiell verseiftem Polyacrylamid verwendet.

3. Verfahren nach Anspruch 1, dadurch gekennzeichnet, daß man der Behandlung in einer Seitenkanalpumpe eine zusätzliche Scherung in einem statischen Mischer nachschaltet.

4. Verfahren nach Anspruch 1, dadurch gekennzeichnet, daß man die Polymerlösung oder einen Teilstrom der Polymerlösung im Kreislauf fährt und mehrfach in einer Seitenkanalpumpe nachbehandelt.

**Claims**

1. A process for the reservoir-related improvement in the properties of aqueous polymer solutions which are used for polymer flooding, which comprises subjecting solutions of copolymers of acrylamide and sodium acrylate with an average molecular weight of from 1 $\times$ 10$^6$ to 40 $\times$ 10$^6$, preferably 5 $\times$ 10$^6$ to 20 $\times$ 10$^6$, and with a polymer content with up to 5,000 ppm in multistage side-channel pumps to a treatment under turbulent flow conditions, with the residence time of the polymer solutions in these devices being less than about 20 sec and the applied pump energy being from 1 to 15 watt/l of solution passed through.

2. A process as claimed in claim 1, wherein solutions of partially hydrolyzed polyacrylamide are used.

3. A process as claimed in claim 1, wherein the treatment in a side-channel pump is followed by additional shearing in a static mixer.

4. A process as claimed in claim 1, wherein the polymer solution or a part stream of the polymer solution is recycled and after-treated several times in a side-channel pump.

**Revendications**

1. Procédé d'amélioration, liée au gisement, des propriétés de solutions aqueuses de polymères servant à l'injection de polymères, caractérisé en ce qu'on soumet des solutions de copolymères d'acrylamide et d'acrylate de sodium, ayant une masse moléculaire moyenne de 1.10$^6$ à 40.10$^6$, de préférence de 5.10$^6$ à 20.10$^6$, et ayant une teneur en polymère allant jusqu'à 5000 ppm, dans des pompes régénératives à plusieurs étages, à un traitement dans les conditions d'un écoulement turbulent, le temps de séjour des solutions de polymères dans ces équipements étant inférieur à environ 20 s l'énergie dépensée pour les pompes étant de 1 à 15 W/l de solution introduite.

2. Procédé selon la revendication 1, caractérisé en ce qu'on utilise des solutions de polyacrylamide partiellement saponifié.

3. Procédé selon la revendication 1, caractérisé en ce qu'on fait suivre le traitement dans une pompe régénérative par un cisaillement supplémentaire dans un mélangeur statique.

4. Procédé selon la revendication 1, caractérisé en ce qu'on fait passer en circuit fermé la solution de polymère ou un courant partiel de la solution de polymère, puis on lui fait subir un traitement ultérieur dans une pompe régénérative de façon réitérée.